# EUROPÄISCHE PATENTANMELDUNG

(11) **EP 1 544 552 A2**
(43) Veröffentlichungstag der Anmeldung: **22.06.2005**
(21) Anmeldenummer: 04029133.8
(22) Anmeldetag: 09.12.2004
(51) Int. Cl.: F24D 19/10

(54) **Steuerenrichtung und Verfahren zum Ein- und Ausschalten einer Zirkulationspumpe**

(30) Priorität: 16.12.2003 DE 10359164; 22.04.2004 DE 102004019533
(71) Anmelder: Buck, Robert, 88142 Wasserburg (DE)
(72) Erfinder: Buck, Robert, 88142 Wasserburg (DE)
(74) Vertreter: Gesthuysen, von Rohr & Eggert

(57) **Zusammenfassung**

Dargestellt und beschrieben ist eine Steuereinrichtung zum Ein- und Ausschalten einer Zirkulationspumpe (8) in einer Warmwasserversorgungsanlage (1), mit einem einen Sensor aufweisenden Meßgerät (11) und mit einem Zeitsteuerungsmittel, wobei das Meßgerät (11) eine Wasserentnahme innerhalb der Warmwasserversorgungsanlage (1) detektiert und die Zirkulationspumpe (8) durch das Schaltsignal des Meßgeräts (11) einschaltbar und durch ein Schaltsignal des Zeitsteuerungsmittels nach einer vorgegebenen Zeit T_{E} ausschaltbar ist.

Bei der Steuereinrichtung ist bei möglichst hohem Komfort für die Bewohner die Einschaltzeit der Zirkulationspumpe (8) zur Energie- und Kosteneinsparung dadurch weiter verringert, daß als Meßgerät ein elektronisches Meßgerät (11) verwendet wird, wobei das Meßgerät (11) einen Signal- oder Schaltausgang (12) aufweist und die Zirkulationspumpe (8) nach dem Ausschalten durch das Schaltsignal des Zeitsteuerungsmittels für eine vorgegebenen Sperrzeit T_{SP} nicht wieder einschaltbar ist.

## Beschreibung

Die Erfindung betrifft eine Steuereinrichtung zum Ein- und Ausschalten einer Zirkulationspumpe in einer Warmwasserversorgungsanlage, mit einem einen Sensor aufweisenden Meßgerät und mit einem Zeitsteuerungsmittel, wobei das Meßgerät eine Wasserentnahme innerhalb der Warmwasserversorgungsanlage oder eine Bewohnung der Wohnung bzw. des Hauses detektiert und die Zirkulationspumpe durch das Schaltsignal des Meßgeräts einschaltbar und durch ein Schaltsignal des Zeitsteuerungsmittels nach einer vorgegebenen Zeit T_{E} ausschaltbar ist. Daneben betrifft die Erfindung noch ein Verfahren zur Steuerung einer Zirkulationspumpe.

Eine zentrale Warmwasserversorgungsanlage in einem Ein- oder Zweifamilienhaus besteht in der Regel aus einem Warmwasserkreislauf, mit einem Warmwasserspeicher, einem Kaltwasserzulauf und einer Warmwasserleitung mit mehreren Zapfstellen (z. B. in den Bädern, der Küche und den Toiletten). Da bei Ein- und Zweifamilienhäusern die Leitungswege zwischen dem in der Regel im Keller angeordneten Warmwasserspeicher und den einzelnen Zapfstellen relativ groß sind, würde bei der zuvor beschriebenen Anordnung nach dem Öffnen einer Zapfstelle zunächst eine längere Zeitdauer vergehen, bis das in der Wasserleitung vorhandene, abgekühlte Wasser ausgelaufen ist und warmes Wasser aus dem Warmwasserspeicher die Zapfstelle erreicht hat. Um diesen Nachteil, der sowohl einen deutlichen Komfortverlust für den Benutzer als auch eine große Verschwendung von Wasser bedeutet, zu vermeiden, ist bei einer Warmwasserversorgungsanlage in der Regel noch eine Zirkulationspumpe und eine Zirkulationsleitung vorhanden. Die Zirkulationsleitung, die zusammen mit der Warmwasserleitung eine am Warmwasserspeicher beginnende und endende Ringleitung bildet, sorgt nun dafür, daß bei eingeschalteter Zirkulationspumpe permanent warmes Wasser an der Stichleitung zur Zapfstelle ansteht.

Durch die Verwendung einer Zirkulationspumpe und einer Zirkulationsleitung wird der Komfort bei der Benutzung einer Warmwasserversorgungsanlage deutlich erhöht, da das gewünschte warme Wasser sehr kurzfristig nach dem Öffnen der Zapfstelle zur Verfügung steht; lediglich das in der Stichleitung zwischen der Zirkulationsleitung und der Zapfstelle vorhandene, abgekühlte Wasser muß noch auslaufen. Da somit sehr schnell das gewünschte warme Wasser an der Zapfstelle zur Verfügung steht und nur noch sehr wenig ungenutztes kaltes Wasser ausfließen muß, wird auch der Wasserverbrauch deutlich reduziert.

Diese Vorteile werden jedoch durch den erhöhten Verbrauch an elektrischer Energie für die Zirkulationspumpe und insbesondere durch erhöhte Wärmeverluste an der Warmwasserleitung erkauft. Um den Energieverbrauch der Zirkulationspumpe und die Wärmeverluste zu verringern, ist es bekannt, die Zirkulationspumpe mit einer Zeitschaltuhr zu betreiben, so daß die Zirkulationspumpe während der Nacht - in der in der Regel kein warmes Wasser benötigt wird - abgeschaltet werden kann und in dieser Zeit auch kein - nicht benötigtes - warmes Wasser in der Warmwasserleitung zirkuliert.

Die in der Praxis weit verbreitete Verwendung derartiger, preiswerter Zeitschaltuhren hat jedoch den Nachteil, daß die Einstellung der Zeitschaltuhr an die jeweiligen individuellen Bedürfnisse angepaßt werden muß, was zunächst einen erhöhten Einstellaufwand bedeutet. Darüber hinaus wird in Kauf genommen, daß außerhalb der eingestellten Betriebszeiten zunächst kaltes Wasser aus der Zapfstelle austritt, bevor das gewünschte warme Wasser zur Verfügung steht. Dies führt in der Regel dazu, daß eine zu lange Betriebszeit eingestellt wird, so daß die Zirkulationspumpe auch noch dann in Betrieb ist bzw. schon dann in Betrieb ist, wenn eigentlich noch kein Warmwasser benötigt wird. Schließlich bleibt auch bei der Verwendung einer Zeitschaltuhr der Nachteil bestehen, daß die Zirkulationspumpe über einen großen Zeitraum - häufig von ca. 6.00 Uhr bis 21.00 Uhr - eingeschaltet ist, ohne daß in dieser Zeit ständig warmes Wasser benötigt wird.

Zur Vermeidung dieser Nachteile sind daher bereits verschiedene Vorschläge gemacht worden, eine "bedarfsorientierte" Steuerung der Zirkulationspumpe zu realisieren. Hierzu kann beispielsweise die Zirkulationspumpe kurz vor dem Öffnen der Zapfstelle mittels eines elektrischen Tasters in Betrieb gesetzt werden. Die Verwendung eines derartigen "Anforderungstasters" erfordert jedoch einen zusätzlichen Verkabelungsaufwand, der jedenfalls bei einem fertiggestellten Haus nur mit einem unverhältnismäßig hohen Aufwand realisiert werden kann. Darüber hinaus ist es erforderlich, daß vor dem Öffnen einer Zapfstelle auch tatsächlich jedes Mal der Taster betätigt werden muß, was in der Praxis jedoch häufig ― zumindest von Gästen ― vergessen wird.

Aus der DE 196 00 455 A1 ist nun eine eingangs beschriebene Steuereinrichtung zum Ein- und Ausschalten einer Zirkulationspumpe in einer Warmwasserversorgungsanlage bekannt, bei der ein in oder an der Warmwasserleitung angeordneter Sensor eine Bewegung des Wassers in der Zirkulationsleitung feststellt und sodann einen Einschaltimpuls für die Zirkulationspumpe erzeugt. Gleichzeitig mit dem Einschalten der Zirkulationspumpe wird ein Zeitschalter aktiviert, der nach einer bestimmten einstellbaren Zeit einen Impuls an eine Ausschaltelektronik abgibt, die den Pumpenbetrieb durch Abschalten der Zirkulationspumpe unterbricht. Der Ruhezustand der Zirkulationspumpe dauert in der Regel solange, bis wieder eine Zapfstelle geöffnet wird, was dann wiederum durch den Sensor detektiert wird. Zusätzlich ist bei der bekannten Steuereinrichtung ein Temperaturfühler an der Warmwasserleitung angeordnet, der ein erneutes Einschalten der Zirkulationspumpe verhindert, wenn das in der Zirkulationsleitung befindliche Wasser noch eine vorgegebene Mindesttemperatur aufweist. Diese Steuereinrichtung sorgt somit dafür, daß die Zirkulationspumpe nur dann eingeschaltet wird, wenn tatsächlich Wasser benötigt wird.

Bei der bekannten Steuereinrichtung sind die Einschaltelektronik, die Ausschaltelektronik und der Zeitschalter im Deckel des Schaltkastens der Zirkulationspumpe untergebracht, wodurch zwar nur sehr kurze elektrische Leitungen erforderlich sind, wodurch jedoch gleichzeitig ein Nachrüsten einer bestehenden Steuereinrichtung erschwert wird. Außerdem ist die Montage der Einschaltelektronik, der Ausschaltelektronik und des Zeitschalters im Deckel des Schaltkastens der Zirkulationspumpe kaum von einem "Nicht-Fachmann", sondern nur von einem Elektriker durchführbar. Darüber hinaus ist neben dem eigentlichen Meßgerät, das eine Wasserentnahme innerhalb der Warmwasserversorgungsanlage detektiert, ein zweites Meßgerät in Form eines Temperaturfühlers erforderlich, damit ein überflüssiges Einschalten der Zirkulationspumpe verhindert werden kann.

Der vorliegenden Erfindung liegt daher die Aufgabe zugrunde, eine Steuereinrichtung sowie ein Verfahren zum Ein- und Ausschalten einer Zirkulationspumpe anzugeben, mit der bzw. mit dem bei möglichst hohem Komfort für die Bewohner die Einschaltzeit der Zirkulationspumpe zur Energie- und Kosteneinsparung verringert wird, wobei die Montage und das Einstellen der Steuereinrichtung möglichst einfach - auch bei bereits existierenden Warmwasserversorgungsanlagen ― durchführbar sein soll.

Diese Aufgabe ist bei der eingangs beschriebenen Steuereinrichtung zum Ein- und Ausschalten einer Zirkulationspumpe in einer Warmwasserversorgungsanlage zunächst dadurch gelöst, daß als Meßgerät ein elektronisches Meßgerät verwendet wird, wobei das Meßgerät einen Signal- oder Schaltausgang aufweist und die Zirkulationspumpe nach dem Ausschalten durch das Schaltsignal des Zeitsteuerungsmittel für eine vorgegebene Sperrzeit T_{SP} nicht wieder einschaltbar ist. Durch die Verwendung eines elektronischen Meßgeräts kann dessen Elektronik - in der Regel ist in dem Meßgerät ein Mikroprozessor vorhanden ― für zusätzliche Steuerungsmaßnahmen verwendet werden. Insbesondere kann das Zeitsteuerungsmittel durch die Elektronik des Meßgeräts realisiert sein.

Dadurch, daß die Zirkulationspumpe nach dem Ausschalten durch das Schaltsignal des Zeitsteuerungsmittels für eine vorgegebene Sperrzeit T_{SP} nicht wieder einschaltbar ist, wird eine überflüssige Betätigung der Zirkulationspumpe verhindert, wodurch der Energieverbrauch reduziert wird. In der Regel ist es nämlich ausreichend, die Zirkulationspumpe für eine kurze Zeit T_{E} einzuschalten, da innerhalb dieser kurzen Zeitdauer das Wasser im Warmwasserkreislauf eine ausreichend hohe Temperatur erreicht. Anschließend vergeht eine gewisse Zeit, die in Regel deutlich länger ist als die zuvor genannte Einschaltzeit T_{E} der Zirkulationspumpe, bis sich das Wasser bei abgeschalteter Zirkulationspumpe in den Warmwasserleitungen soweit abgekühlt hat, daß überhaupt ein erneutes Einschalten der Zirkulationspumpe notwendig wird. Durch die Realisierung der Sperrzeit T_{SP} wird somit verhindert, daß die Zirkulationspumpe eingeschaltet wird, obwohl das in der Warmwasserleitung vorhandene Wasser noch eine ausreichend hohe Temperatur aufweist. Hierbei ist erkannt worden, daß dazu die genaue Bestimmung der Temperatur in der Warmwasserleitung nicht erforderlich ist, so daß auf die Verwendung eines zusätzlichen Meßgeräts verzichtet werden kann. Vielmehr ist es ausreichend - ohne merkliche Komforteinbußen in Kauf nehmen zu müssen - eine Sperrzeit T_{SP} durch ein Zeitsteuermittel vorzugeben. Dadurch kann auf die Verwendung eines zweiten, separaten Meßgeräts verzichtet werden, was sowohl die Anschaffungskosten als auch den Montageaufwand der Steuereinrichtung reduziert.

Gemäß einer bevorzugten Ausgestaltung wird die Sperrzeit T_{SP} zwar durch das Zeitsteuermittel vorgegeben, die Sperrzeit T_{SP} ist jedoch nicht fest, sondern sie wird automatisch an den tatsächlichen Bedarf angepaßt. Wird während der Sperrzeit T_{SP} Warmwasser an einer Zapfstelle entnommen, so ist die Leitung zwischen dem Warmwasserspeicher und der Zapfstelle weiter mit warmen Wasser gefüllt. Die Zeit, die vergeht, bis sich das Wasser bei abgeschalteter Zirkulationspumpe in der Warmwasserleitung wieder abgekühlt hat, vergrößert sich dadurch. Bevorzugt ist daher vorgesehen, daß sich dann auch die Sperrzeit T_{SP} automatisch vergrößert, wenn während der Sperrzeit T_{SP} Warmwasser an einer Zapfstelle entnommen worden ist. Ein entsprechendes Signal zur Vergrößerung Sperrzeit T_{SP} kann einfach von dem elektronischen Meßgerät an das Zeitsteuerungsmittel gegeben werden. Dabei kann die Sperrzeit T_{SP} beispielsweise automatisch um eine fest Zeitdauer verlängert werden, oder die Sperrzeit T_{SP} beginnt einfach von neuem zu laufen, wenn während der Sperrzeit T_{SP} Warmwasser an einer Zapfstelle entnommen worden ist.

Gemäß einer Ausgestaltung der erfindungsgemäßen Steuereinrichtung ist die Zirkulationspumpe nach Ablauf der vorgegebenen Sperrzeit T_{SP} durch ein erneutes Schaltsignal des Meßgeräts wieder einschaltbar. Die Zirkulationspumpe wird somit erst dann wieder eingeschaltet, wenn durch das Meßgerät ein entsprechender Bedarf an Warmwasser detektiert wird. Alternativ dazu kann jedoch auch vorgesehen sein, daß nach Ablauf der vorgegebenen Sperrzeit T_{SP} die Zirkulationspumpe automatisch wieder einschaltbar ist. Durch eine entsprechende Einstellung des Zeitsteuerungsmittels kann somit beispielsweise vorgegeben werden, daß nach dem ersten Einschalten der Zirkulationspumpe durch ein Schaltsignal des Meßgeräts die Zirkulationspumpe - jeweils nach Ablauf der vorgegebenen Sperrzeit T_{SP} ― noch zwei weitere Male für eine vorgegebene kurze Zeit eingeschaltet wird. Erst danach wird die Zirkulationspumpe erst wieder durch ein Schaltsignal des Meßgeräts eingeschaltet. Das Ende der Sperrzeit T_{SP} ist somit gleichzeitig das Schaltsignal für ein erneutes Einschalten der Zirkulationspumpe.

Bei der zweiten Variante der Steuereinrichtung wird die Zirkulationspumpe somit nicht ausschließlich bedarfsorientiert eingeschaltet, sondern es wird durch ein automatisches, mehrmaliges, kurzfristiges Einschalten der Zirkulationspumpe dafür gesorgt, daß für einen verlängerten Zeitraum das in der Warmwasserleitung befindliche Wasser ausreichend warm ist.

Bei dieser Variante wird somit dem Wunsch nach einem erhöhten Komfort dem Vorzug gegenüber dem Wunsch nach einem möglichst geringen Energieverbrauch der Vorrang gewährt. Wird die Zirkulationspumpe ausschließlich durch das Schaltsignal des Meßgeräts eingeschaltet, so kann es vorkommen, daß - nach einem längeren Stillstand der Zirkulationspumpe - das Wasser in der Warmwasserleitung stark abgekühlt ist, so daß beim Öffnen einer Zapfstelle zunächst kaltes Wasser austritt. Die Zeitdauer, die vergeht bis warmes Wasser an der Zapfstelle austritt, hängt dabei unter anderem von der Pumpleistung der Zirkulationspumpe ab. Da die Zirkulationspumpe bei der erfindungsgemäßen Steuereinrichtung nicht mehr - wie in der Praxis üblich - tagsüber im Dauerbetrieb ist, sondern immer nur für eine kurze Zeitdauer T_{E} eingeschaltet wird, kann bei der erfindungsgemäßen Steuereinrichtung eine Zirkulationspumpe mit einer stärkeren Pumpleistung verwendet werden, wobei dennoch der Energieverbrauch durch das immer nur kurzzeitige Einschalten der Zirkulationspumpe auf Dauer deutlich verringert ist.

Gemäß einer vorteilhaften Ausgestaltung der Erfindung weist die Steuereinrichtung eine Netzteileinheit zur Versorgung der Zirkulationspumpe und des Meßgeräts mit elektrischer Energie auf, wobei die Netzteileinheit ein Gehäuse, einen Netzanschlußstecker, mindestens eine Netzsteckdose und/oder mindestens einen Steckeranschluß und ein Schaltelement aufweist. Durch die Verwendung einer derartigen Netzteileinheit kann die Montage der erfindungsgemäßen Steuereinrichtung auch bei einer bereits bestehenden Warmwasserversorgungsanlage besonders einfach durchgeführt werden. Hierzu kann die Netzteileinheit einfach in eine Netzsteckdose des Hausversorgungsnetzes eingesteckt werden. Der elektrische Anschluß der Zirkulationspumpe kann dann einfach dadurch erfolgen, daß der Netzstecker der Zirkulationspumpe in die Netzsteckdose in der Netzteileinheit eingesteckt wird. Ebenso kann auch das elektronische Meßgerät über die Netzteileinheit mit elektrischer Energie versorgt werden.

Gemäß einer bevorzugten Ausgestaltung der erfindungsgemäßen Steuereinrichtung ist die Versorgungsspannung des elektronischen Meßgeräts eine Kleinspannung bis maximal 48 Volt. Hierzu weist die Netzteileinheit einen Trafo und ein Relais, insbesondere einen Gleichspannungstrafo und ein Gleichspannungsrelais, auf. Ein derartiges elektronisches Meßgerät wird dann vorteilhafterweise über ein Standardkabel mit einer Steckverbindung an einem entsprechenden Steckeranschluß in der Netzteileinheit angeschlossen. Durch die Verwendung eines elektronischen Meßgeräts für Kleinspannung muß das Meßgerät nur eine niedrige Schutzklasse aufweisen, da die Anforderungen an die einzuhaltenden Kriechstrecken und die Isolation des Meßgeräts gering sind. Daher ist die Installation eines solchen Meßgeräts auch von einem "Nicht-Fachmann" durchführbar, d. h. die Montage der erfindungsgemäßen Steuereinrichtung kann von dem Hausbewohner selber durchgeführt werden.

Gemäß einer bevorzugten Ausgestaltung wird als Meßgerät ein Strömungsmeßgerät bzw. ein Strömungswächter, insbesondere ein kalorimetrisches Strömungsmeßgerät bzw. ein kalorimetrischer Strömungswächter, verwendet. Strömungsmeßgeräte haben den Vorteil, daß sie relativ preiswert sind und auch in einer einfachen Grundausführung eine für die vorliegende Anwendung ausreichende Meßgenauigkeit aufweisen.

Derartige Strömungsmeßgeräte bzw. Strömungswächter werden zur Erfassung des Wärmetransports strömender Medien eingesetzt. Strömungswächter steht dabei für eine Ausführungsform, bei der ein Wärmeübergang lediglich kontrolliert wird, bei der also lediglich das Vorhandensein oder Nicht-Vorhandensein eines bestimmten Wärmeübergangs und damit einer bestimmten Strömung festgestellt wird. Demgegenüber steht Strömungsmeßgeräte für eine Ausführungsform, bei der ein Wärmeübergang bzw. eine Strömung gemessen wird; es wird also ein dem Wärmeübergang bzw. der Strömung entsprechender analoger Meßwert gewonnen, der natürlich auch in einen digitalisierten Meßwert umgesetzt werden kann. Anders ausgedrückt liefert ein Strömungswächter eine qualitative Aussage "Strömung vorhanden" oder "Strömung nicht vorhanden", während ein Strömungsmeßgeräte eine quantitative Aussage in bezug auf die Strömung macht. Im vorliegenden Fall wird stets von einem Strömungsmeßgerät gesprochen, worunter jedoch auch Strömungswächter verstanden werden sollen, da es zum Einschalten der Zirkulationspumpe nicht erforderlich ist, eine quantitative Aussage über den Wärmeübergang bzw. über die Strömungsmenge oder die Strömungsgeschwindigkeit machen zu können. Erforderlich ist lediglich die Detektion einer bestimmtem "Mindestströmung", die eine Wasserentnahme innerhalb der Warmwasserversorgungsanlage anzeigt.

Strömungswächter bzw. Strömungsmeßgeräte der hier bevorzugt verwendeten Art arbeiten nach dem kalorimetrischen Prinzip. Im allgemeinen arbeitet man mit einer Differenztemperaturmessung. Ein erstes Temperaturmeßelement mißt die eigentliche Meßtemperatur, wobei sich die Meßtemperatur aus der Heizleistung des Heizelements, der Temperatur des strömenden Mediums und der strömungsabhängigen Wärmetransportkapazität des strömenden Mediums ergibt. Weiter mißt im allgemeinen ein zweites Temperaturmeßelement eine Referenztemperatur. Im vorliegenden Fall ist die Messung der Referenztemperatur nicht erforderlich. Darüber hinaus kann das Heizelement auch die Funktion des zuvor erläuterten zweiten Temperaturmeßelements übernehmen; es handelt sich dann um ein Heiz- und Temperaturmeßelement.

Bei der Verwendung eines zuvor beschriebenen kalorimetrischen Strömungswächters bzw. Strömungsmeßgeräts kann dann ein zusätzlicher Signal- oder Schaltausgang für das Meßsignal des ohnehin vorhandenen Temperaturmeßelements vorgesehen sein, so daß das Meßsignal des Temperaturmeßelements bedarfsweise zur Steuerung der Zirkulationspumpe mit herangezogen werden kann.

Als elektronisches Meßgerät kann neben einem Strömungsmeßgerät grundsätzlich auch ein Temperaturmeßgerät, ein Druckmeßgerät oder ein Näherungsschalter, beispielsweise ein kapazitiver Näherungsschalter, verwendet werden.

Neben der zuvor beschriebenen Ausführungsform, bei der das Zeitsteuerungsmittel in dem Meßgerät integriert ist, wobei das Zeitsteuerungsmittel durch einen Timer oder einen Mikroprozessor realisiert werden kann, kann das Zeitsteuerungsmittel, beispielsweise in Form einer Zeitschaltuhr, auch in der Netzteileinheit angeordnet sein. Darüber hinaus kann die Netzteileinheit auch ein zusätzliches Zeitsteuerungsmittel, insbesondere eine Zeitschaltuhr, und ein Anzeigeelement aufweisen. Das zusätzliche Zeitsteuerungsmittel kann dabei insbesondere für eine sogenannte Legionellen-Steuerung ― die nachfolgend noch genauer erläutert wird - verwendet werden.

Das Anzeigeelement, bei dem es sich insbesondere um eine LCD-Anzeige handeln kann, kann dabei zur Anzeige der Zeitdauer dienen, während der die Zirkulationspumpe tatsächlich nur eingeschaltet ist. Die angezeigte Zeitdauer kann zur Vereinfachung beispielsweise auf einen 24 - Stunden Betrieb bezogen sein. Dadurch ist für den Benutzer sofort ablesbar, wie effizient die Steuereinrichtung eingestellt ist, und ob eine eventuelle eingegebene Verkürzung der Zeit T_{E} und/oder eine Verlängerung der Sperrzeit T_{SP} zu einer deutlichen Reduzierung der Betriebsstunden der Zirkulationspumpe geführt hat.

Bei dem eingangs beschriebenen Verfahren ist die zuvor genannte Aufgabe zunächst dadurch gelöst, daß die Zirkulationspumpe nach dem Ausschalten durch das Schaltsignal des Zeitsteuerungsmittels für eine vorgegebene Sperrzeit T_{SP} nicht wieder einschaltbar ist.

Die Zeit T_{E} ist dabei vorzugsweise einstellbar, so daß sie an die jeweiligen Gegebenheiten vor Ort - Länge der Leitungen, Förderleistung der Pumpe, Anzahl der Zapfstellen - angepaßt werden kann. Gemäß einer bevorzugten Ausgestaltung des Verfahrens sowie der Steuereinrichtung wird die Zeit T_{E} nur so groß gewählt, daß das warme Wasser durch das Einschalten der Zirkulationspumpe die letzte Zapfstelle bzw. die Stichleitung zur letzten Zapfstelle erreicht hat. Die Zeit T_{E} wird also nicht so groß gewählt, daß auch die Rücklaufleitung des Warmwasserkreislaufes erwärmt wird. Bei einer Rücklaufleitung, deren Länge etwa der Hälfte der Länge des Warmwasserkreislaufes entspricht, kann dadurch die Einschaltdauer der Zirkulationspumpe fast halbiert werden, ohne daß Komforteinbußen hingenommen werden müssen. Somit wird ein unnötiges Erwärmen der Rücklaufleitung vermieden, womit sich die Wärmeverluste deutlich reduzieren.

Zur weiteren Reduzierung der Energieverluste ist auch bei dem erfindungsgemäßen Verfahren bevorzugt vorgesehen, daß sich die Sperrzeit T_{SP} automatisch vergrößert, wenn während der Sperrzeit T_{SP} Warmwasser an einer Zapfstelle entnommen worden ist.

Wie zuvor bereits im Zusammenhang mit der erfindungsgemäßen Steuereinrichtung ausgeführt, kann nach Ablauf der vorgegebenen Sperrzeit T_{SP} die Zirkulationspumpe durch ein erneutes Schaltsignal des Meßgeräts oder automatisch nach Ablauf der Sperrzeit T_{SP} wieder für eine Zeit T_{E} eingeschaltet werden.

Gemäß einer weiteren Variante des erfindungsgemäßen Verfahrens wird die Zirkulationspumpe nach Ablauf der vorgegebenen Sperrzeit T_{SP} spätestens nach einer weiteren Zeitdauer T_{K} automatisch wieder eingeschaltet, es sei denn, daß die Zirkulationspumpe durch ein erneutes Schaltsignal des Meßgeräts bereits vorher wieder eingeschaltet worden ist. Durch diese Variante, die eine Kombination der beiden ersten Varianten darstellt, wird somit dafür gesorgt, daß die Zirkulationspumpe ― unabhängig von einer Wasserentnahme an einer der Zapfstellen - nur eine vorgegebene Zeitdauer ausgeschaltet bleibt. Diese maximale Auszeit Tₘₐₓ ergibt sich dabei aus der Summe der Sperrzeit T_{SP} und der Zeitdauer T_{K}. Gleichzeitig ist jedoch sichergestellt, daß dann, wenn nach Ablauf der Sperrzeit T_{SP} aber vor Ablauf der maximalen Auszeit Tₘₐₓ erneut warmes Wasser benötigt wird, die Zirkulationspumpe durch das Schaltsignal des Meßgeräts wieder eingeschaltet wird.

Wird die zweite oder dritte Variante des Wiedereinschaltens der Zirkulationspumpe angewandt, so ist vorteilhafterweise vorgesehen, daß sich der Vorgang des automatischen Einschaltens der Zirkulationspumpe n-mal wiederholt, wobei nach dem n-ten Einschalten der Zirkulationspumpe die Zirkulationspumpe dann erst durch ein erneutes Schaltsignal des Meßgeräts wieder eingeschaltet wird. Vorteilhafterweise werden dabei die Einschaltzeiten T_{En} für das Einschalten der Zirkulationspumpe unterschiedlich lang gewählt. Bevorzugt ist dabei vorgesehen, daß die Zeit T_{E1}, nach der die Zirkulationspumpe durch ein Schaltsignal des Zeitsteuerungsmittels ein erstes Mal ausgeschaltet wird, größer ist als die Zeit T_{E2}, für die die Zirkulationspumpe ein zweites Mal eingeschaltet wird. Hierdurch wird dem Umstand Rechnung getragen, daß in der Regel beim ersten Einschalten der Zirkulationspumpe durch das Schaltsignal des Meßgeräts (beispielsweise am Morgen) die Temperatur des in der Warmwasserleitung vorhandenen Wassers geringer ist als beim nachfolgenden Wiedereinschalten der Zirkulationspumpe. Daher kann die Einschaltdauer T_{E2} beim zweiten Einschalten der Zirkulationspumpe ― ebenso wie eine weitere Einschaltdauer T_{E3} ― geringer gewählt werden.

Gemäß einer weiteren vorteilhaften Ausgestaltung des erfindungsgemäßen Verfahrens wird die Zirkulationspumpe nach einer vorgegebenen großen Zeitdauer T_{L} zur Vermeidung der Vermehrung von Legionellen für eine längere Zeitdauer T_{LE} eingeschaltet. Wenn sich Legionellen in erwärmtem Wasser vermehren und dieses Wasser als lungengängiges Aerosol vom Menschen aufgenommen wird, können grippeähnliche Erkrankungsbilder bis hin zu schwer verlaufenden Lungenentzündungen verursacht werden. Daher kommt es in Warmwasserversorgungsanlagen darauf an, Bedingungen einzuhalten, unter denen es nicht zu einer gesundheitsgefährdenden Vermehrung der Legionellen kommen kann. Da hierbei der Temperatur des erwärmten Wassers eine entscheidende Bedeutung zukommt, wobei der kritische Temperaturbereich in etwa zwischen 25°C und 55°C liegt, kann eine Vermehrung von Legionellen dadurch verhindert werden, daß das Wasser innerhalb bestimmter Zeitabstände durch die Zirkulationspumpe zirkuliert und ― zusammen mit der Warmwasserspeichersteuerung - auf eine Temperatur oberhalb von 55°C, vorzugsweise auf eine Temperatur von ca. 60°C, erwärmt wird.

Gemäß einer Ausgestaltung des erfindungsgemäßen Verfahrens wird dabei die Zirkulationspumpe nach der vorgegebenen Zeitdauer T_{L} durch ein Schaltsignal des Meßgeräts eingeschaltet und nach Ablauf einer. weiteren Zeitdauer T_{LE} durch ein zweites Schaltsignal des Meßgeräts wieder ausgeschaltet. Das erste Schaltsignal des Meßgeräts zum Starten der Legionellen-Steuerung wird vorzugsweise durch einen Einschaltvorgang des Meßgeräts ausgelöst. Hierzu wird das Meßgerät, beispielsweise durch eine in der Netzteileinheit vorgesehene Zeitschaltuhr, kurzzeitig abgeschaltet und dann wieder eingeschaltet, wodurch in dem Meßgerät eine Initialisierungs-Funktion aktiviert wird, die ein Einschalten der Zirkulationspumpe für die Zeitdauer T_{LE} bewirkt.

Alternativ dazu kann die zuvor genannte Legionellen-Steuerung auch direkt durch ein zusätzliches Zeitschaltelement, insbesondere eine Zeitschaltuhr, oder durch die Warmwasserspeichersteuerung ein- und ausgeschaltet werden. Dabei kann der Einschaltvorgang des Meßgeräts auch durch die Warmwasserspeichersteuerung ausgelöst werden, die dann ein kurzzeitiges Abschalten des Meßgeräts veranlaßt. Die Zeitdauer T_{L} liegt dabei in der Regel zwischen mehreren Stunden und einigen Tagen und die Zeitdauer T_{LE} im Bereich von wenigen Stunden, vorzugsweise ca. zwei Stunden.

Im einzelnen gibt es nun eine Vielzahl von Möglichkeiten, die erfindungsgemäße Steuereinrichtung bzw. das erfindungsgemäße Verfahren zur Steuerung einer Zirkulationspumpe auszugestalten und weiterzubilden. Derartige Ausgestaltungen und Weiterbildungen ergeben sich aus den den Patentansprüchen 1 und 12 nachgeordneten Patentansprüchen sowie aus der nachfolgenden Beschreibung bevorzugter Ausführungsbeispiele in Verbindung mit der Zeichnung. In der Zeichnung zeigen:
- Fig. 1: eine Prinzipskizze einer ersten Ausführung einer Steuereinrichtung zum Ein- und Ausschalten einer Zirkulationspumpe in einer Warmwasserversorgungsanlage,
- Fig. 2: eine Prinzipskizze eines zweiten Ausführungsbeispiels einer Steuereinrichtung zum Ein- und Ausschalten einer Zirkulationspumpe in einer Warmwasserversorgungsanlage,
- Fig. 3: ein vereinfachter Schaltplan einer Netzteileinheit einer erfindungsgemäßen Steuereinrichtung,
- Fig. 4: ein Ablaufschema eines ersten Ausführungsbeispiels des erfindungsgemäßen Verfahrens,
- Fig. 5: ein Ablaufschema eines zweiten Ausführungsbeispiels des erfindungsgemäßen Verfahrens,
- Fig. 6: ein Ablaufschema eines dritten Ausführungsbeispiels des erfindungsgemäßen Verfahrens und
- Fig. 7: ein Ablaufschema einer Variante des Ausführungsbeispiels gemäß Fig. 4.

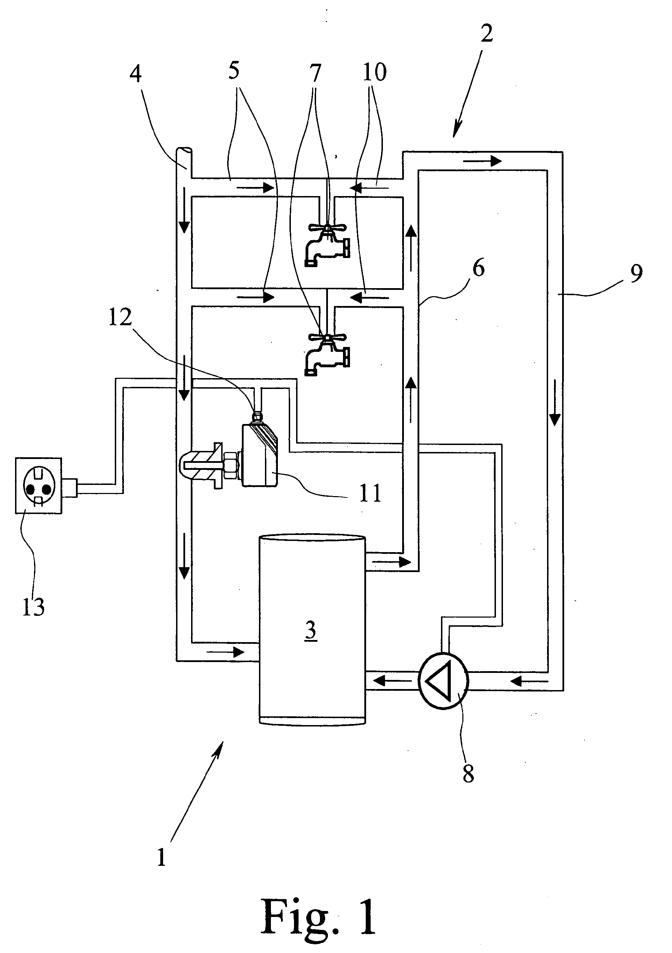

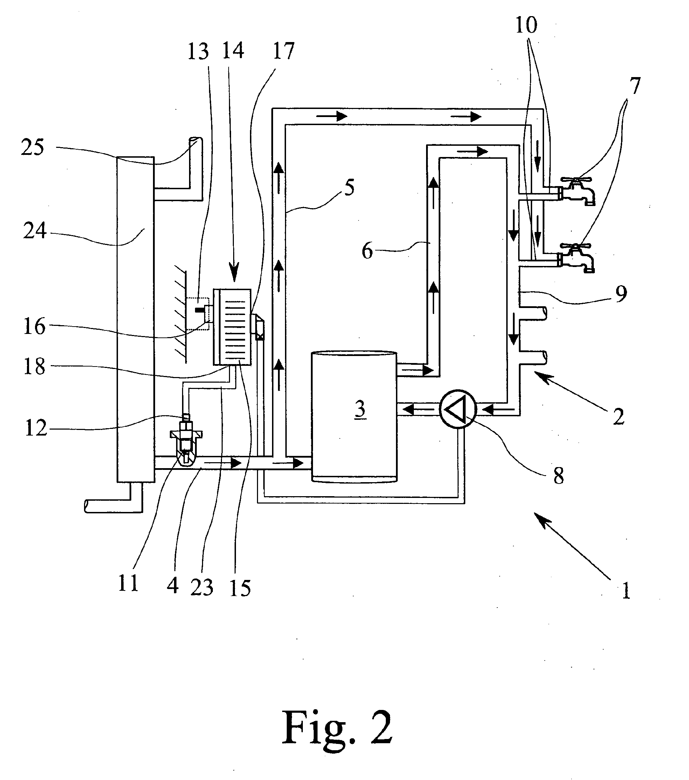

Die Fig. 1 und 2 zeigen schematisch jeweils eine zentrale Warmwasserversorgungsanlage 1, die einen Warmwasserkreislauf 2, einen Warmwasserspeicher 3, mit einer - hier nicht dargestellten - Warmwasserspeichersteuereinrichtung, einen Kaltwasserzulauf 4, eine Kaltwasserleitung 5, eine Warmwasserleitung 6 und - beispielhaft - zwei Zapfstellen 7 aufweist. Selbstverständlich sind bei einer Warmwasserversorgungsanlage 1 eines Ein- oder Zweifamilienhauses in der Regel mehr als nur zwei Zapfstellen 7 vorhanden, was hier zur Vereinfachung jedoch nicht dargestellt ist.

Wie in modernen Warmwasserversorgungsanlagen 1 üblich, sind darüber hinaus eine Zirkulationspumpe 8 und eine Zirkulationsleitung 9 vorgesehen, wobei die Zirkulationspumpe 8 in den beiden Ausführungsbeispielen im Rücklauf des Warmwasserkreislaufes 2 angeordnet ist. Die Zirkulationsleitung 9 bildet zusammen mit der Warmwasserleitung 6 den Warmwasserkreislauf 2 und sorgt zusammen mit der Zirkulationspumpe 8 dafür, daß dann, wenn die Zirkulationspumpe 8 eingeschaltet ist, permanent warmes Wasser an den Stichleitungen 10 zu den Zapfstellen 7 ansteht.

Bei herkömmlichen Warmwasserversorgungsanlagen 1 ist die Zirkulationspumpe 8 in der Regel mit einer Zeitschaltuhr verbunden, die so eingestellt ist, daß die Zirkulationspumpe 8 lediglich in den Nachtstunden, beispielsweise von 22.00 Uhr bis 6.00 Uhr, ausgeschaltet wird, um dadurch Strom- und Heizkosten zu sparen, ohne jedoch tagsüber einen Komfortverlust hinnehmen zu müssen.

Bei der in den Fig. 1 und 2 dargestellten Steuereinrichtung zum Ein- und Ausschalten der Zirkulationspumpe 8 ist nun zunächst anstelle einer einfachen Zeitschaltuhr ein elektronisches Meßgerät 11 im Kaltwasserzulauf 4 zum Warmwasserspeicher 3 vorgesehen, wobei das Meßgerät 11 eine Wasserentnahme an einer beliebigen Zapfstelle 7 innerhalb der Warmwasserversorgungsanlage 1 feststellt. Die Anordnung eines einzigen elektronischen Meßgeräts 11 im Kaltwasserzulauf 4 zum Warmwasserspeicher 3 ist dabei ausreichend, da beim Öffnen einer beliebigen Zapfstelle 7 kaltes Wasser aus dem Kaltwasserzulauf 4 in den Warmwasserspeicher 3 nachfließt. Dies wird dann durch das beispielsweise als kalorimetrisches Strömungsmeßgerät ausgebildete elektronische Meßgerät 11 festgestellt. Über einen Signal- oder Schaltausgang 12 des elektronischen Meßgeräts 11 wird dann durch ein entsprechendes Schaltsignal des Meßgeräts 11 die Zirkulationspumpe 8 eingeschaltet.

Vorteilhafterweise ist dabei das elektronische Meßgerät 11 ― wie in Fig. 1 dargestellt - hinter dem Abzweig der Kaltwasserleitungen 5 vom Kaltwasserzulauf 4 angeordnet, so daß das Meßgerät 11 das Öffnen einer Zapfstelle 7 dann nicht detektiert, wenn lediglich kaltes Wasser benötigt wird. Durch ein vorzugsweise im elektronischen Meßgerät 11 angeordnetes Zeitsteuerungsmittel wird die Zirkulationspumpe 8 nach einer Zeitdauer T_{E} wieder ausgeschaltet. Erfindungsgemäß ist nun weiter vorgesehen, daß nach dem Ausschalten der Zirkulationspumpe 8 diese für eine vorgegebene Sperrzeit T_{SP} nicht wieder einschaltbar ist. In der Regel ist es nämlich ausreichend, die Zirkulationspumpe 8 für eine kurze Zeitdauer T_{E} einzuschalten, da innerhalb dieser kurzen Zeit das Wasser im Warmwasserkreislauf 2 eine ausreichend hohe Temperatur aufweist. Da danach eine gewisse Zeitdauer vergeht, bis das erwärmte Wasser in der Warmwasserleitung 2 wieder abkühlt, ist es nicht erforderlich, die Zirkulationspumpe 8 kurze Zeit später direkt wieder einzuschalten, auch wenn an einer Zapfstelle 7 warmes Wasser entnommen wird. Diese Zeitdauer vergrößert sich, wenn während der ursprünglichen Sperrzeit T_{SP} Warmwasser an einer Zapfstelle 7 entnommen wird, so daß die Zeitdauer bis zum nächsten Einschalten der Zirkulationspumpe 8 vergrößert wird (die Sperrzeit T_{SP} wird vergrößert). Durch die vorgegebene Sperrzeit T_{SP} wird somit ein unnötiges Einschalten der Zirkulationspumpe 8 verhindert, wodurch die Energiekosten für den Betreib der Zirkulationspumpe 8 verringert werden.

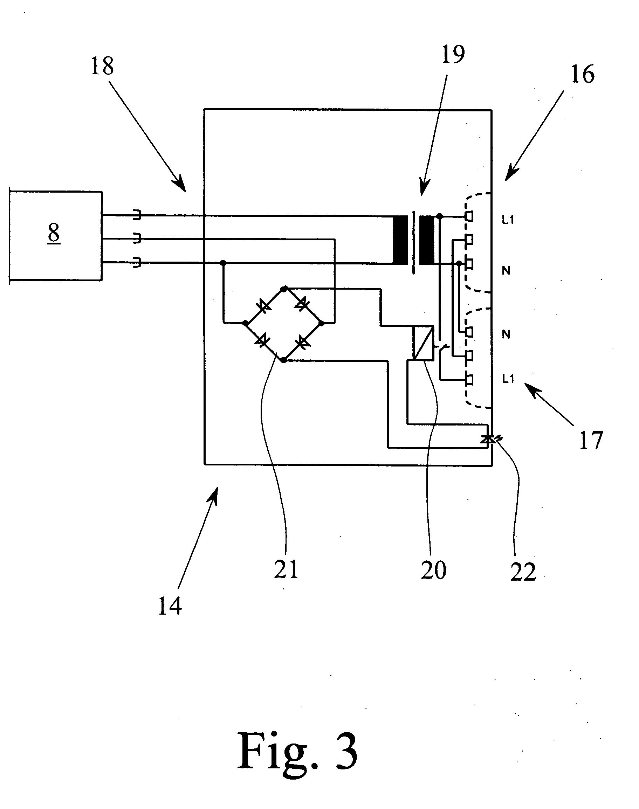

Bei dem Ausführungsbeispiel gemäß Fig. 1 sind die Zirkulationspumpe 8 und das elektronische Meßgerät 11 direkt an einer Netzsteckdose 13 des Hausversorgungsnetzes angeschlossen. Im Unterschied dazu weist die Steuereinrichtung gemäß Fig. 2 neben dem elektronischen Meßgerät 11 noch eine Netzteileinheit 14 auf, über die sowohl die Zirkulationspumpe 8 als auch das Meßgerät 11 mit elektrischer Energie versorgt werden. Die Netzteileinheit 14 weist ein Gehäuse 15, einen Netzsteckeranschluß 16, eine Netzsteckdose 17 und einen Steckeranschluß 18 auf. Wie insbesondere aus der Fig. 3 erkennbar ist, ist im Inneren des Gehäuses 15 der Netzteileinheit 14 noch ein Trafo 19, ein Relais 20 als Schaltelement und ein Gleichrichter 21 angeordnet. Zusätzlich weist die Netzteileinheit 14 noch eine LED 22 als Anzeigeelement für den Betrieb der Zirkulationspumpe 8 auf. Darüber hinaus kann die Netzteileinheit 14 auch noch - was hier jedoch nicht dargestellt ist - eine LCD-Anzeige aufweisen.

Vorzugsweise wird gemäß Fig. 2 ein Meßgerät 11 für Kleinspannungen bis 48 Volt verwendet, wobei dann das Meßgerät 11 über ein Standard-Sensorkabel 23 an den Steckeranschluß 18 der Netzteileinheit 14 anschließbar ist. Je nach Ausführung des elektronischen Meßgeräts 11 kann das Zeitsteuerungsmittel zum Ausschalten der Zirkulationspumpe 8 nach der Zeit T_{E} bzw. zum Verhindern eines erneuten Wiedereinschaltens der Zirkulationspumpe 8 während der Sperrzeit T_{SP} in dem elektronischen Meßgerät 11 oder in der Netzteileinheit 14 angeordnet sein. Bevorzugt wird das Zeitsteuerungsmittel jedoch durch einen Timer oder einen Mikroprozessor im Meßgerät 11 realisiert.

Bei der in Fig. 2 dargestellten Warmwasserversorgungsanlage 1 ist das Meßgerät 11 vor dem Abzweig der Kaltwasserleitung 5 angeordnet ist, so daß das Meßgerät 1 auch dann ein Schaltsignal abgibt, wenn lediglich kaltes Wasser benötigt wird. Diese Anordnung des Meßgerät 11 führt zu einem häufigeren Einschalten der Zirkulationspumpe 8, was zwar einen etwas höheren Energieverbrauch, gleichzeitig aber auch einen etwas höheren Komfort bedeutet. Wenn nämlich der Benutzer - kurz nachdem kaltes Wasser aus einer Zapfstelle 7 ausgeflossen ist - warmes Wasser wünscht, so steht dadurch, daß die Zirkulationspumpe 8 bereits eingeschaltet worden ist, direkt warmes Wasser zur Verfügung. Um jedoch ein unnötiges Einschalten der Zirkulationspumpe 8 zu verhindern, ist das Meßgerät 1 erst hinter einem Abzweig 24 zu einem Gartenanschluß 25 angeordnet, da in der Regel im Garten kein warmes Wasser benötigt wird.

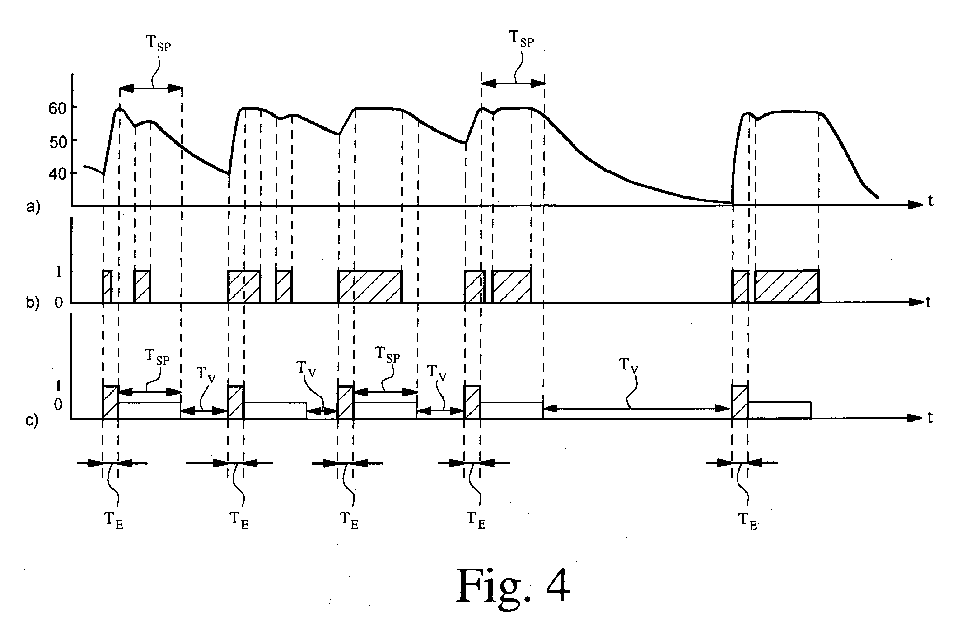

Anhand der Fig. 4 bis 6 soll nachfolgend die Funktionsweise der erfindungsgemäße Steuereinrichtung bzw. das erfindungsgemäße Verfahren im einzelnen noch mal erläutert werden.

In dem oberen Diagramm (Fig. 4a, 5a und 6a) ist dabei jeweils die Temperatur des Wassers in der Warmwasserleitung 6 über die Zeit t aufgetragen. Das mittlere Diagramm (Fig. 4b, 5b und 6b) zeigt jeweils einen zeitlichen Verlauf des Schaltsignals des Meßgeräts 11, wobei das Schaltsignal nur die beiden Zustände "Ein" oder "Aus" bzw. "1" und "0" aufweist. Schließlich ist in dem dritten Diagramm (Fig. 4c, 5c und 6c) jeweils der Schaltzustand der Zirkulationspumpe 8 dargestellt, ebenfalls in Abhängigkeit von der Zeit t.

Allen drei dargestellten Varianten des erfindungsgemäßen Verfahrens ist zunächst gemeinsam, daß zu einem Zeitpunkt eine Zapfstelle 7 geöffnet wird, woraufhin von dem Meßgerät 11 ein entsprechendes Schaltsignal ausgegeben und dadurch die Zirkulationspumpe 8 eingeschaltet wird. Nach einer vorgegebenen Zeit T_{E} wird dann die Zirkulationspumpe 8 wieder ausgeschaltet, unabhängig davon, ob das Meßgerät 11 noch eine Wasserentnahme oder ein erneutes Öffnen einer Zapfstelle 7 detektiert oder nicht. Die Zeit T_{E} wird dabei so gewählt, daß das warme Wasser durch das Einschalten der Zirkulationspumpe 8 die letzte Zapfstelle 7 bzw. die Stichleitung 10 zur letzten Zapfstelle 8 erreicht hat. Die Zeit T_{E} wird also nicht so groß gewählt, daß auch die Zirkulationsleitung 9, d. h. die Rücklaufleitung des Warmwasserkreislaufes 2, erwärmt wird. Insbesondere ist es nicht erforderlich, die Zeit T_{E} so groß zu wählen, daß warmes Wasser an der Zirkulationspumpe 8 bzw. dem Warmwasserspeicher 3 ansteht. Dadurch kann die Zeit T_{E} von ca. 2 bis 3 Minuten auf ca. 1 Minute oder weniger, beispielsweise ca. 30 Sekunden, verkürzt werden. Anschließend wird die Zirkulationspumpe 8 - bei den drei Varianten des Verfahrens gemäß den Fig. 4 bis 6 - für eine vorgegebene Sperrzeit T_{SP} von 20 bis 60 Minuten, vorzugsweise von ca. 25 bis 40 Minuten ausgeschaltet. Während dieser Sperrzeit T_{SP} bleibt die Zirkulationspumpe 8 auch dann ausgeschaltet, wenn das Meßgerät 11 ein erneutes Schaltsignal liefert.

Bei der Variante gemäß Fig. 4 erfolgt nach Ablauf der Sperrzeit T_{SP} erst dann wieder ein Einschalten der Zirkulationspumpe 8, wenn diese ein erneutes Schaltsignal des Meßgeräts 11 bekommen hat, d. h. wenn erneut eine Zapfstelle 7 geöffnet wird. Die Zeitdauer T_{V} zwischen dem Ende der Sperrzeit T_{SP} und dem erneuten Einschalten der Zirkulationspumpe 8 ist somit variable und allein vom erneuten Öffnen einer Zapfstelle 7 abhängig.

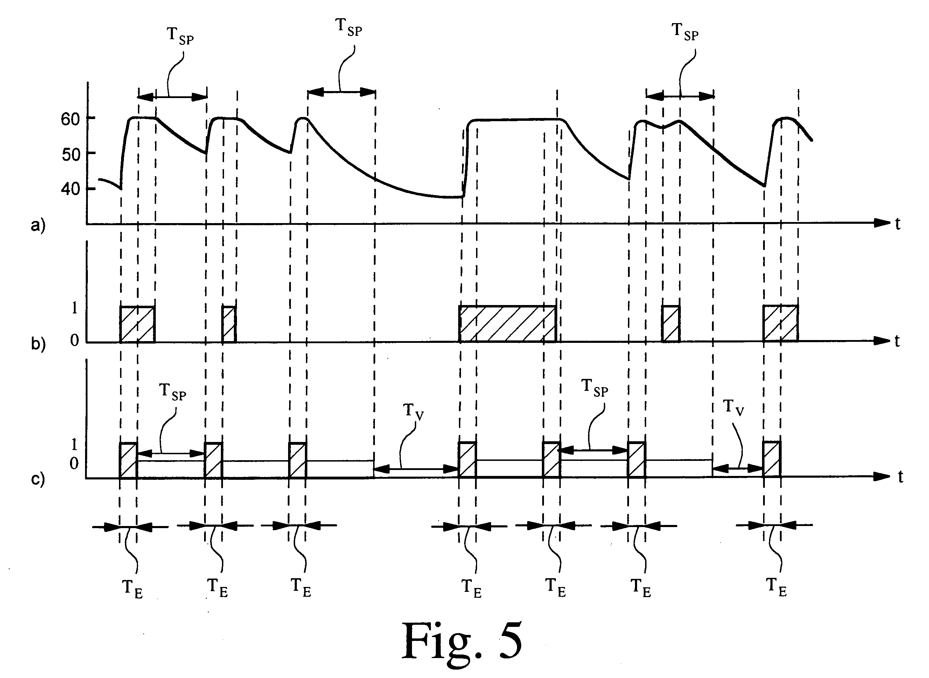

Im Unterschied dazu wird bei dem Verfahren, dessen Ablaufschema in Fig. 5 dargestellt ist, die Zirkulationspumpe 8 nach dem Ende der Sperrzeit T_{SP} automatisch wieder für eine kurze Zeitdauer T_{E} eingeschaltet. Nach dem ersten, durch das Schaltsignal des Meßgeräts 11 ausgelösten Einschalten der Zirkulationspumpe 8 wird dabei die Zirkulationspumpe 8 noch zwei weitere Male eingeschaltet, unabhängig davon ob eine Zapfstelle 7 geöffnet wird oder nicht. Erst nach dreimaligem, automatischen Einschalten der Zirkulationspumpe 8 erfolgt bei dieser Variante des Verfahrens ein erneutes Einschalten der Zirkulationspumpe 8 erst dann, wenn wieder ein neues Schaltsignal des Meßgeräts 11 anliegt.

Bei dem in Fig. 5 dargestellten Verfahren kann selbstverständlich die Anzahl n der automatischen Einschaltvorgänge auch weniger oder mehr als drei betragen. Darüber hinaus kann vorgesehen sein, daß die Einschaltzeiten T_{En} der einzelnen Einschaltzyklen variiert. Insbesondere kann die Zeit T_{E1} des ersten Einschaltens der Zirkulationspumpe 8 größer gewählt werden als die Zeit T_{E2,3} des zweiten oder dritte Einschaltens der Zirkulationspumpe 8.

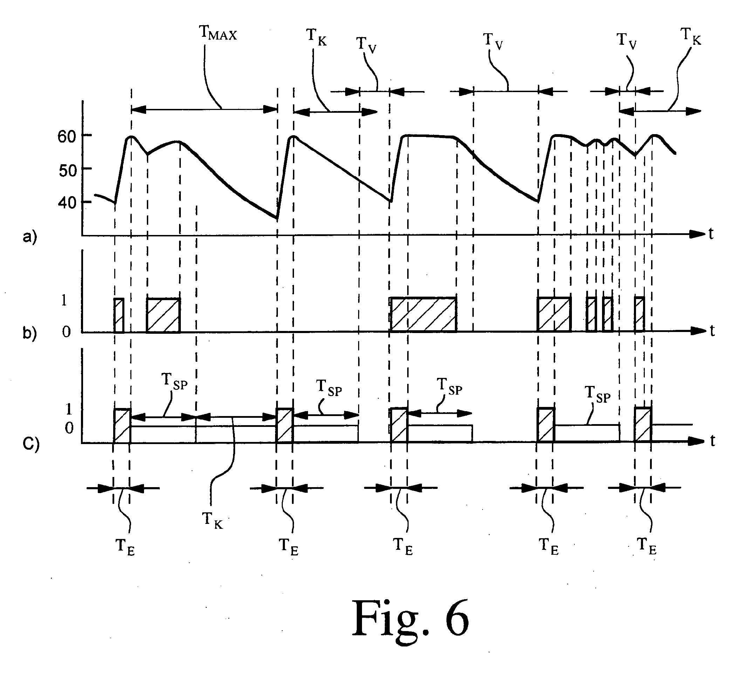

Bei einer dritten Ausführungsform des erfindungsgemäßen Verfahrens, dessen Ablaufschema in Fig. 6 dargestellt ist, findet eine Kombination der beiden ersten Verfahren statt. Bei dieser Variante wird die Zirkulationspumpe 8 nach Ablauf der ersten Sperrzeit T_{SP} entweder automatisch nach Ablauf einer weiteren Zeitdauer T_{K} oder durch das Schaltsignal des Meßgeräts 11 eingeschaltet, je nachdem ob ein erneutes Öffnen einer Zapfstelle 7 vor oder nach Ablauf der Zeitdauer T_{K} erfolgt. Durch diese Variante des Verfahrens wird somit die maximale Auszeit Tₘₐₓ der Zirkulationspumpe 8 fest vorgegeben. Sie ergibt sich - unabhängig vom Öffnen einer Zapfstelle 7 - aus der Summe der Sperrzeit T_{SP} und der Zeitdauer T_{K}.

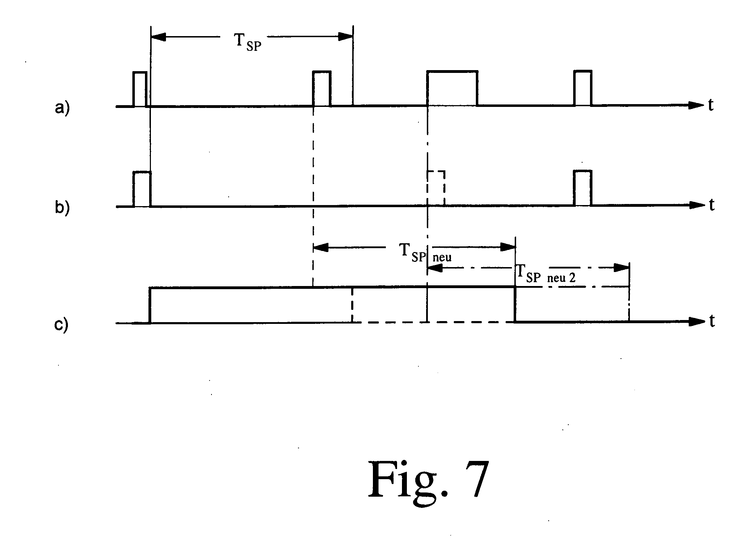

Dem jeweils oberen Diagramm (Fig. 4a, 5a und 6a) der Fig. 4 bis 6 kann außerdem entnommen werden, daß dann, wenn Warmwasser an einer Zapfstelle 7 entnommen wird, die Warmwasserleitung 6 fortlaufend von warmen Wasser durchflossen wird, so daß sich die Temperatur in der Warmwasserleitung 6 nicht abkühlt, auch wenn die Zirkulationspumpe 8 nicht eingeschaltet ist. Es ist somit u. U. nicht erforderlich, die Zirkulationspumpe 8 wieder einzuschalten, auch wenn die Sperrzeit T_{SP} beendet ist und erneut eine Zapfstelle 7 geöffnet wird. Dies zeigt sich beispielsweise besonders deutlich in der Fig. 5. Da nach dem vierten Einschalten der Zirkulationspumpe 8 für einen relativ langen Zeitraum warmes Wasser an einer Zapfstelle 7 entnommen wird, ist das in der Warmwasserleitung 6 vorhandene Wasser nach Ablauf der Sperrzeit T_{SP} kaum oder gar nicht abgekühlt, so daß eigentlich ein erneutes Einschalten der Zirkulationspumpe 8 nicht erforderlich wäre. Dies kann vorteilhafter weise dadurch berücksichtigt werden, daß die Sperrzeit T_{SP} dann verlängert wird. Dies wird nachfolgend anhand von Fig. 7 erläutert.

In Fig. 7 ist im oberen Diagram (Fig. 7a) eine beliebig angenommene Sequenz einer Wasserentnahme an einer Zapfstelle 7 dargestellt, der ein gleicher zeitlichen Verlauf des Schaltsignals des Meßgeräts 11 entspricht. Das mittlere Diagram (Fig. 7b) zeigt die dazugehörigen Schaltzustand der Zirkulationspumpe 8, die vom Schaltsignals des Meßgeräts 11 und von dem im unteren Diagram (Fig 7c) dargestellten Verlauf der Sperrzeit T_{SP} abhängt. Bei der Variante gemäß Fig. 7 erfolgt ebenso wie bei der Variante gemäß Fig. 4 nach Ablauf der Sperrzeit T_{SP} erst dann wieder ein Einschalten der Zirkulationspumpe 8, wenn diese ein erneutes Schaltsignal des Meßgeräts 11 bekommen hat, d. h. wenn erneut eine Zapfstelle 7 geöffnet wird. Im Unterschied zu dem Ausführungsbeispiels gemäß den Fig. 4 bis 6 wird bei dieser Variante die Sperrzeit T_{SP} jedoch dann verlängert, wenn während der ursprünglich eingestellten Sperrzeit T_{SP} erneut eine Zapfstelle 7 geöffnet worden ist. Im einfachsten Fall wird dabei die Sperrzeit T_{SP} einfach erneut gestartet, wenn eine Zapfstelle 7 erneut geöffnet wird. In Fig. 7c ist gestrichelt der Verlauf der Sperrzeit T_{SP} ohne Verlängerung und in Fig. 7b der sich daraus ergebene Verlauf des Schaltzustandes der Zirkulationspumpe 8 dargestellt. Wie der Fig. 7 entnommen werden kann, erfolgt somit bei dieser Variante des Verfahrens ein erneutes Einschalten der Zirkulationspumpe 8 nicht bereits mit der dritten Wasserentnahme, sondern erst bei der darauf folgenden, vierten Wasserentnahme.

Daneben ist in Fig. 7c strichpunktiert der Verlauf der Sperrzeit T_{SP} dargestellt, wenn zusätzlich eine weitere ― zweite ― Verlängerung der Sperrzeit T_{SP} erfolgt, wenn auch innerhalb der verlängerten Sperrzeit T_{SP} erneut eine Zapfstelle 7 geöffnet worden ist. Bei dieser Variante ist ein Einschalten der Zirkulationspumpe 8 bei sehr häufiger Warmwasserentnahme somit überhaupt nicht, oder nur in sehr großen Zeitabständen erforderlich.

## Patentansprüche

1. Steuereinrichtung zum Ein- und Ausschalten einer Zirkulationspumpe (8) in einer Warmwasserversorgungsanlage (1), mit einem einen Sensor aufweisenden Meßgerät (11) und mit einem Zeitsteuerungsmittel, wobei das Meßgerät (11) eine Wasserentnahme innerhalb der Warmwasserversorgungsanlage (1) oder eine Bewohnung der Wohnung bzw. des Hauses detektiert und die Zirkulationspumpe (8) durch das Schaltsignal des Meßgeräts (11) einschaltbar und durch ein Schaltsignal des Zeitsteuerungsmittels nach einer vorgegebenen Zeit T_{E} ausschaltbar ist,
**dadurch gekennzeichnet,**
**daß** als Meßgerät ein elektronisches Meßgerät (11) verwendet wird, wobei das Meßgerät (11) einen Signal- oder Schaltausgang (12) aufweist, und
**daß** die Zirkulationspumpe (8) nach dem Ausschalten durch das Schaltsignal des Zeitsteuerungsmittels für eine vorgegebenen Sperrzeit T_{SP} nicht wieder einschaltbar ist.

2. Steuereinrichtung nach Anspruch 1, **dadurch gekennzeichnet, daß** nach Ablauf der vorgegebenen Sperrzeit T_{SP} die Zirkulationspumpe (8) durch ein erneutes Schaltsignal des Meßgeräts (11) wieder einschaltbar ist.

3. Steuereinrichtung nach Anspruch 1, **dadurch gekennzeichnet, daß** nach Ablauf der vorgegebenen Sperrzeit T_{SP} die Zirkulationspumpe (8) automatisch wieder einschaltbar ist.

4. Steuereinrichtung nach einem der Ansprüche 1 bis 3, **dadurch gekennzeichnet, daß** eine Netzteileinheit (14) zur Versorgung der Zirkulationspumpe (8) und des Meßgeräts (11) mit elektrischer Energie vorgesehen ist, wobei die Netzteileinheit (14) ein Gehäuse (15), einen Netzanschlußstecker (16), mindestens eine Netzsteckdose (17) und/oder mindestens einen Steckeranschluß (18) und ein Schaltelement aufweist.

5. Steuereinrichtung nach Anspruch 4, **dadurch gekennzeichnet, daß** die Netzteileinheit (14) einen Trafo (19) und ein Relais (20), insbesondere ein Gleichspannungsrelais, aufweist.

6. Steuereinrichtung nach Anspruch 4 oder 5, **dadurch gekennzeichnet, daß** die Netzteileinheit (14) ein zusätzliches Zeitsteuerungsmittel, insbesondere eine Zeitschaltuhr, und vorzugsweise ein Anzeigeelement (22) aufweist.

7. Steuereinrichtung nach einem der Ansprüche 1 bis 6, **dadurch gekennzeichnet, daß** das Zeitsteuerungsmittels in dem Meßgerät (11) integriert ist.

8. Steuereinrichtung nach Anspruch 7, **dadurch gekennzeichnet, daß** das Meßgerät (11) ein elektronisches Schaltelement, insbesondere einen Transistor, und einen Mikroprozessor aufweist, wobei der Mikroprozessor die Funktion des Zeitsteuerungsmittels übernimmt.

9. Steuereinrichtung nach einem der Ansprüche 1 bis 8, **dadurch gekennzeichnet, daß** die Versorgungsspannung des Meßgeräts (11) eine Kleinspannung ist.

10. Steuereinrichtung nach einem der Ansprüche 1 bis 9, **dadurch gekennzeichnet, daß** das Meßgerät (11) als Strömungsmeßgerät bzw. als Strömungswächter, insbesondere als kalorimetrisches Strömungsmeßgerät bzw. als kalorimetrischer Strömungswächter, ausgebildet ist.

11. Steuereinrichtung nach Anspruch 10, **dadurch gekennzeichnet, daß** das Strömungsmeßgerät ein Heizelement und mindestens einem Temperaturmeßelement aufweist.

12. Verfahren zur Steuerung einer Zirkulationspumpe in einer Warmwasserversorgungsanlage, mit einem einen Sensor aufweisenden Meßgerät und mit einem Zeitsteuerungsmittel, wobei das Meßgerät eine Wasserentnahme innerhalb der Warmwasserversorgungsanlage detektiert und wobei die Zirkulationspumpe durch ein Schaltsignal des Meßgeräts eingeschaltet und durch ein Schaltsignal eines Zeitsteuerungsmittels nach einer Zeit T_{E} ausgeschaltet wird,
**dadurch gekennzeichnet,**
**daß** die Zirkulationspumpe nach dem Ausschalten durch das Schaltsignal des Zeitsteuerungsmittels für eine vorgegebenen Sperrzeit T_{SP} nicht wieder einschaltbar ist.

13. Verfahren nach Anspruch 12, **dadurch gekennzeichnet, daß** die Zeit T_{E} einstellbar ist und nur so groß gewählt wird, daß das warme Wasser durch das Einschalten der Zirkulationspumpe die letzte Zapfstelle erreicht hat.

14. Verfahren nach Anspruch 12 oder 13, **dadurch gekennzeichnet, daß** sich die Sperrzeit T_{SP} automatisch verlängert, wenn während der Sperrzeit T_{SP} Warmwasser an einer Zapfstelle (7) entnommen worden ist.

15. Verfahren nach einem der Ansprüche 12 bis 14, **dadurch gekennzeichnet, daß** nach Ablauf der Sperrzeit T_{SP} die Zirkulationspumpe durch ein erneutes Schaltsignal des Meßgeräts wieder für eine Zeit T_{E} eingeschaltet wird.

16. Verfahren nach Anspruch 15, **dadurch gekennzeichnet, daß** nach Ablauf der Sperrzeit T_{SP} die Zirkulationspumpe spätestens nach einer weiteren Zeitdauer T_{K} automatisch wieder eingeschaltet wird, es sei denn, daß die Zirkulationspumpe durch ein erneutes Schaltsignal des Meßgeräts bereits wieder eingeschaltet worden ist.

17. Verfahren nach einem der Ansprüche 12 bis 14, **dadurch gekennzeichnet, daß** nach Ablauf der Sperrzeit T_{SP} die Zirkulationspumpe automatisch wieder für eine Zeit T_{E} eingeschaltet wird.

18. Verfahren nach Anspruch 16 oder 17, **dadurch gekennzeichnet, daß** sich der Vorgang des automatischen Einschaltens der Zirkulationspumpe n-mal wiederholt, und daß nach dem n-ten Einschalten der Zirkulationspumpe die Zirkulationspumpe durch ein erneutes Schaltsignal des Meßgeräts wieder eingeschaltet wird.

19. Verfahren nach Anspruch 17 oder 18, **dadurch gekennzeichnet, daß** die Zeit T_{E1}, nach der die Zirkulationspumpe durch ein Schaltsignal des Zeitsteuerungsmittels ein erstes Mal ausgeschaltet wird, größer ist als die Zeit T_{E2}, nach der die Zirkulationspumpe durch ein Schaltsignal des Zeitsteuerungsmittels ein zweites Mal ausgeschaltet wird.

20. Verfahren nach einem der Ansprüche 12 bis 19, **dadurch gekennzeichnet, daß** die Zirkulationspumpe zur Vermeidung der Vermehrung von Legionellen nach einer vorgegebenen großen Zeitdauer T_{L} für eine längere Zeitdauer T_{LE} eingeschaltet wird (Legionellensteuerung).

21. Verfahren nach Anspruch 20, **dadurch gekennzeichnet, daß** die Zirkulationspumpe durch ein erstes Schaltsignal des Meßgeräts eingeschaltet und durch ein zweites Schaltsignal des Meßgeräts nach der Zeitdauer T_{LE} ausgeschaltet wird.

22. Verfahren nach Anspruch 20 oder 21, **dadurch gekennzeichnet, daß** die Legionellensteuerung durch einen Einschaltvorgang des Meßgeräts aktiviert wird.

23. Verfahren nach Anspruch 20, **dadurch gekennzeichnet, daß** die Zirkulationspumpe durch ein erstes Schaltsignal eines zusätzlichen Zeitschaltelements, insbesondere einer Zeitschaltuhr, eingeschaltet und durch ein zweites Schaltsignal des Zeitschaltelements nach der Zeitdauer T_{LE} ausgeschaltet wird.
